# EUROPEAN PATENT APPLICATION

(11) **EP 4 606 930 A1**
(43) Date of publication of application: **27.08.2025**
(21) Application number: 23879767.4
(22) Date of filing: 16.10.2023
(51) Int. Cl.: C25B 1/01, B01D 53/62, C01B 32/50, C25B 11/04, G06Q 30/06, G06Q 50/00

(54) **CARBON DIOXIDE TRAPPING MODULE, AND CARBON DIOXIDE RECOVERY DEVICE**

(30) Priority: 18.10.2022 JP 2022166997; 30.03.2023 JP 2023056658
(71) Applicant: SUMITOMO ELECTRIC INDUSTRIES, LTD., Osaka-shi, Osaka 541-0041 (JP)
(72) Inventor: BABA, Masato, Osaka-shi, Osaka 541-0041 (JP); MAEDA, Toru, Osaka-shi, Osaka 541-0041 (JP); NAKAJIMA, Tetsuya, Osaka-shi, Osaka 541-0041 (JP); HIRAI, Kei, Osaka-shi, Osaka 541-0041 (JP)
(74) Representative: Boult Wade Tennant LLP
(86) International application number: PCT/JP2023/037457
(87) International publication number: WO 2024/085124

(57) **Abstract**

A carbon dioxide capture module including a first electrode, a second electrode, a solution in which the first electrode and the second electrode are immersed, a gas supplying unit that supplies carbon dioxide to the solution, and a voltage applying mechanism that applies a voltage across the first electrode and the second electrode, in which the first electrode includes a carbon dioxide capture material containing a first metal that has iron as a main constituent, and the second electrode contains carbon or a second metal having a lower ionization tendency than the first metal.

## Description

### TECHNICAL FIELD

The present disclosure relates to a carbon dioxide capture module, and a carbon dioxide recovery device.

This application claims priority based on Japanese Patent Application No. 2022-166997 filed on October 18, 2022 and Japanese Patent Application No. 2023-056658 filed on March 30, 2023, the entire contents of which are incorporated herein by reference.

### BACKGROUND ART

PTL 1 discloses a system of linking a reduction amount of CO₂ (carbon dioxide) corresponding to a driving distance calculated from an amount of charge of an electric vehicle with a user who drives the electric vehicle to manage eco-points to be provided to the user.

PTL 2 discloses a method for bringing carbon dioxide into contact with fine particles or aggregates of the fine particles of a substance containing a metal or a low-valent metal under presence of water to convert carbon dioxide into a harmless substance as a carbonate of a high-valent metal and immobilize the substance.

### CITATION LIST

### PATENT LITERATURE

PTL 1: Japanese Patent Laying-Open No. 2012-59197
PTL 2: Japanese Patent Laying-Open No. 2007-075773

### SUMMARY OF INVENTION

A carbon dioxide capture module of the present disclosure includes a first electrode, a second electrode, a solution in which the first electrode and the second electrode are immersed, a gas supplying unit that supplies carbon dioxide to the solution, and a voltage applying mechanism that applies a voltage across the first electrode and the second electrode. The first electrode includes a carbon dioxide capture material containing a first metal that has iron as a main constituent. The second electrode contains carbon or a second metal having a lower ionization tendency than the first metal.

### BRIEF DESCRIPTION OF DRAWINGS

Fig. 1 is a schematic perspective view illustrating a configuration of a carbon dioxide recovery device of a first embodiment.
Fig. 2 is a block diagram explaining the configuration of the carbon dioxide recovery device of the first embodiment.
Fig. 3 is a schematic sectional view illustrating an outline of a carbon dioxide capture module included in the carbon dioxide recovery device of the first embodiment.
Fig. 4 is a schematic perspective view illustrating a configuration of a capture material providing device included in the carbon dioxide recovery device of the first embodiment.
Fig. 5 is a block diagram explaining the configuration of the capture material providing device included in the carbon dioxide recovery device of the first embodiment.
Fig. 6 is a schematic sectional view illustrating an outline of a carbon dioxide capture module included in a carbon dioxide recovery device of a second embodiment.
Fig. 7 is a schematic sectional view illustrating an outline of a carbon dioxide capture module included in a carbon dioxide recovery device of a third embodiment.
Fig. 8 is a view explaining an outline of a carbon dioxide capture module included in a carbon dioxide recovery device of a fourth embodiment.
Fig. 9 is a view explaining an outline of a carbon dioxide capture module included in a carbon dioxide recovery device of a fifth embodiment.

### DETAILED DESCRIPTION

### [Problem to be Solved by the Present Disclosure]

The demand for carbon dioxide reduction is increasing more and more. As disclosed in PTL 1, subjects promoting the reduction are not limited to public organizations and companies, but the reduction is also promoted at individual levels. However, measures that can be taken at the individual levels only contribute to reducing carbon dioxide relatively by not discharging carbon dioxide, and do not actually reduce the carbon dioxide present in the atmosphere. For this reason, it cannot be said that there are many opportunities for the individuals to actually experience the reduction of carbon dioxide or to obtain a benefit from the reduction. In addition, as described in PTL 2, development of a method for recovering carbon dioxide is also promoted. There is a demand for achievement of a device that can increase the capture efficiency to a practical level with a simple configuration.

The present disclosure has an object to provide a carbon dioxide capture module that is excellent in capture efficiency of carbon dioxide.

### [Advantageous Effect of the Present Disclosure]

The carbon dioxide capture module of the present disclosure is excellent in capture efficiency of carbon dioxide.

### <<Description of Embodiments>>

First, embodiments of the present disclosure are listed and described.
(1) A carbon dioxide capture module of one aspect of the present disclosure includes a first electrode, a second electrode, a solution in which the first electrode and the second electrode are immersed, a gas supplying unit that supplies carbon dioxide to the solution, and a voltage applying mechanism that applies a voltage across the first electrode and the second electrode. The first electrode includes a carbon dioxide capture material containing a first metal that has iron as a main constituent. The second electrode contains carbon or a second metal having a lower ionization tendency than the first metal.
   In the carbon dioxide capture module of Item (1) above, when the gas supplying unit supplies carbon dioxide to the solution, part of the dissolved carbon dioxide changes to carbonate ions or bicarbonate ions. That is, carbonate ions or bicarbonate ions are present in the solution. Hereinafter, carbonate ions and bicarbonate ions are sometimes collectively referred to as carbonate ions and the like. In the carbon dioxide capture module of Item (1) above, a voltage is applied across the first electrode and the second electrode by the voltage applying mechanism so that divalent iron ions are eluted into the solution from the first metal included in the carbon dioxide capture material. Therefore, in the carbon dioxide capture module of Item (1) above, the carbonate ions or bicarbonate ions present in the solution react with the eluted divalent iron ions to produce iron carbonate or iron bicarbonate. Hereinafter, iron carbonate and iron bicarbonate are sometimes collectively referred to as iron carbonate and the like. In the carbon dioxide capture module of Item (1) above, the carbon dioxide capture material is covered with the solution, and hence the oxidation of the divalent iron ions to trivalent iron ions or the conversion to an iron oxide is easily suppressed. Moreover, the elution amount of the divalent iron ions is easily increased by applying the voltage across the first electrode and the second electrode by the voltage applying mechanism. That is, a state in which a ratio of the divalent iron ions in the solution is increased is easily maintained. Therefore, the carbon dioxide capture module of Item (1) above is excellent in capture efficiency of carbon dioxide because the carbonate ions and the like can be easily captured.
(2) In the carbon dioxide capture module of Item (1) above, the voltage may be 1 mV or more and 2 V or less.
   When the voltage is 1 mV or more, production of the iron carbonate and the like is easily promoted. When the voltage is 2 V or less, the reaction between the divalent iron ions and the carbonate ions and the like is less likely to become unstable.
(3) In the carbon dioxide capture module of Item (1) above or Item (2) above, the carbon dioxide capture material may be a pressed powder compact containing a powder made of the first metal, or a sintered material made of the first metal.
   The carbon dioxide capture module of Item (3) above is excellent in capture efficiency of carbon dioxide.
(4) In the carbon dioxide capture module of Item (3) above, the powder may have an average particle size of 1 µm or more and 2,000 µm or less.
   When the average particle size of the powder is 1 µm or more, the capture efficiency of carbon dioxide is more easily improved. When the average particle size of the powder is 2,000 µm or less, the powder is easy to handle.
(5) In the carbon dioxide capture module of any one of Item (1) above to Item (4) above, the first electrode may include an electrode base made of carbon or a metal having a lower ionization tendency than the first metal, and an electrode piece provided on a surface of the electrode base, and the electrode piece may be the carbon dioxide capture material.
   In the carbon dioxide capture module of Item (5) above, the electrode piece is used for reaction with the carbonate ions and the like. When the first electrode includes the electrode base and the electrode piece, the electrode base remains even when the entire electrode piece is used for reaction with the carbonate ions and the like, and hence, at the time of reconstructing the first electrode, it is only required to bring a new electrode piece into contact with the electrode base. Meanwhile, when the first electrode is configured only of the electrode piece, at the time of reconstructing the first electrode after the entire electrode piece is used for reaction with the carbonate ions and the like, it is required to reconnect the electrode piece to a conductive wire of the voltage applying mechanism. Therefore, in the carbon dioxide capture module of Item (5) above, the reconstruction of the first electrode is easier as compared to a case in which the first electrode is configured only of the electrode piece.
(6) The carbon dioxide capture module of Item (5) above may further include a magnet provided to bring the carbon dioxide capture material into contact with the electrode base.
   In the carbon dioxide capture module of Item (6) above, the magnet makes it difficult for the carbon dioxide capture material to separate from the electrode base, and hence the divalent iron ions may be easily continuously eluted into the solution from the first metal included in the carbon dioxide capture material. In the carbon dioxide capture module of Item (6) above, even when the entire carbon dioxide capture material originally adsorbed to the electrode base is used for the reaction with the carbonate ions and the like, when a new carbon dioxide capture material is loaded into the solution, the newly loaded carbon dioxide capture material can be adsorbed to the electrode base.
(7) In the carbon dioxide capture module of Item (5) above, the electrode base may be a mesh member on which the electrode piece is placed.
   In the carbon dioxide capture module of Item (7) above, the electrode base is the mesh member, and hence the carbon dioxide capture material loaded from the outside of the solution is easily placed on the electrode base. In the carbon dioxide capture module of Item (7) above, the produced iron carbonate and the like easily passes through a mesh of the mesh member, and hence the iron carbonate and the like can be easily recovered.
(8) The carbon dioxide capture module of any one of Item (1) above to Item (7) above may further include a sensor unit and a capture control unit. The sensor unit detects at least one selected from the group consisting of a carbon dioxide concentration of the solution, a temperature of the solution, a pH value of the solution, a turbidity of the solution, an amount of a capture product produced by the carbon dioxide capture module, a value of the voltage across the first electrode and the second electrode, and a value of a current flowing between the first electrode and the second electrode. The capture control unit controls an operation of the voltage applying mechanism based on a detection result of the sensor unit.
   The carbon dioxide capture module of Item (8) above includes the sensor unit and the capture control unit, and hence reaction for production of the iron carbonate and the like can be easily controlled.
(9) In the carbon dioxide capture module of any one of Item (1) above to Item (8) above, a temperature of the solution may be 4°C or more and less than 200°C.
   When the temperature of the solution is 4°C or more, the dissolving amount of carbon dioxide is large. When the temperature of the solution is less than 200°C, the iron carbonate and the like are less likely to be thermally decomposed.
(10) In the carbon dioxide capture module of any one of Item (1) above to Item (9) above, a pH of the solution may be 0 or more and less than 12.
   When the pH of the solution is 0 or more, iron carbonate easily precipitates. When the pH of the solution is less than 12, iron hydroxide is less likely to precipitate.
(11) In the carbon dioxide capture module of any one of Item (1) above to Item (10) above, the solution may contain water.
   Water is readily available, and hence the carbon dioxide capture module of Item (11) above is low cost and easy to operate.
(12) In the carbon dioxide capture module of Item (11) above, the solution may further contain at least one selected from the group consisting of an acidic substance, a dissolution promoter, a pH buffer, a carbonation promoter, a reducing agent, a sequestering agent, and a builder.
   The carbon dioxide capture module of Item (12) above easily maintains the state in which the ratio of the divalent iron ions in the solution is increased, and hence easily suppresses reduction in capture efficiency of carbon dioxide.
(13) In the carbon dioxide capture module of any one of Item (1) above to Item (12) above, the second metal may be copper or platinum.
   Copper or platinum is suitable for a constituent material of the second electrode.
(14) A carbon dioxide recovery device of one aspect of the present disclosure includes the carbon dioxide capture module of any one of Item (1) above to Item (13) above, a recovery request input unit, a recovery result output unit, and a recovery control unit. The recovery control unit causes the recovery result output unit to output a recovery result of the carbon dioxide capture module based on a recovery request from the recovery request input unit.
   The carbon dioxide recovery device of Item (14) above includes the carbon dioxide capture module that is excellent in capture efficiency of carbon dioxide, and hence easily recovers carbon dioxide. In addition, the carbon dioxide recovery device of Item (14) above can be used as an independent device having a simple configuration for recovering carbon dioxide, and hence has high convenience.
(15) In the carbon dioxide recovery device of Item (14) above, the recovery result output unit may include an article providing unit that provides an article corresponding to the recovery result, and the article may include a capture product produced by the carbon dioxide capture module.
   **In** the carbon dioxide recovery device of Item (15) above, a user of the device can obtain the article as the recovery result of carbon dioxide. With the user actually obtaining the capture product, the user can feel contribution to reduction of carbon dioxide. This promotes activities of carbon dioxide reduction. **In** addition, with the article including the capture product, the produced capture product can be used effectively. The capture product included in the article does not discharge carbon dioxide unless the capture product is burned again. Therefore, the state in which carbon dioxide is reduced is easily maintained.
(16) **In** the carbon dioxide recovery device of Item (15) above, the article may be a composite material including the capture product and resin in which the capture product is embedded.
   In the carbon dioxide recovery device of Item (16) above, the article is the composite material, and hence the number of options for the article can be increased.
(17) In the carbon dioxide recovery device of Item (15) above or Item (16) above, the article may include a one-dimensional code or a two-dimensional code that represents operation information including the recovery result.
   In the carbon dioxide recovery device of Item (17) above, the user of the device can grasp the recovery result by reading the one-dimensional code or the two-dimensional code with a terminal capable of reading the code. In addition, it becomes easier to construct a system in which the user obtains various services depending on the recovery result.
(18) The carbon dioxide recovery device of any one of Item (14) above to Item (17) above may further include a capture material loading mechanism that loads the carbon dioxide capture material into the carbon dioxide capture module.
   The carbon dioxide recovery device of Item (18) above includes the capture material loading mechanism, and hence the user can easily feel direct involvement in carbon dioxide reduction. Thus, activities of carbon dioxide reduction are promoted. Further, even when the entire carbon dioxide capture material included in the device is used for reaction with the carbonate ions and the like, a new carbon dioxide capture material itself can be loaded into the solution.
(19) The carbon dioxide recovery device of Item (18) above may further include a capture material providing device that provides the carbon dioxide capture material, and the capture material providing device may be provided independently of the capture material loading mechanism.

The carbon dioxide recovery device of Item (19) above includes the capture material providing device, and hence the user can obtain a new carbon dioxide capture material to be loaded into the solution. The user can directly hold the carbon dioxide capture material and load it for the purpose of recovery by himself or herself. Therefore, as compared to a case in which the user inserts money into the carbon dioxide recovery device, the user can easily feel direct involvement in carbon dioxide reduction. Thus, activities of carbon dioxide reduction are promoted.

### <<Details of Embodiments of the Present Disclosure>>

Embodiments of the present disclosure are described with reference to the drawings. The embodiments described below show one specific example of the present disclosure. Numerical values, shapes, materials, components, arrangement and connection examples of the components, procedures, and the like described below are examples of the embodiments. Each figure is a schematic view and is not always drawn precisely. The same components in the figures are denoted by the same reference symbols. Descriptions of the functions and the like of the same components are omitted as appropriate.

### <<First Embodiment>>

### [Carbon Dioxide Recovery Device]

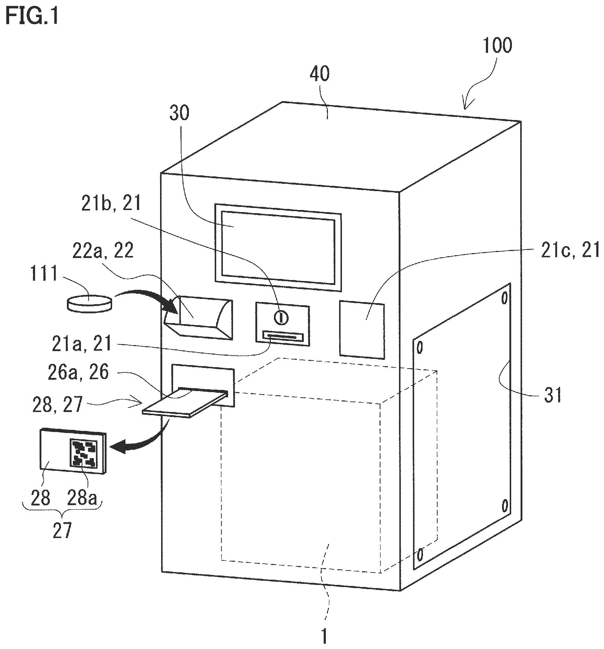

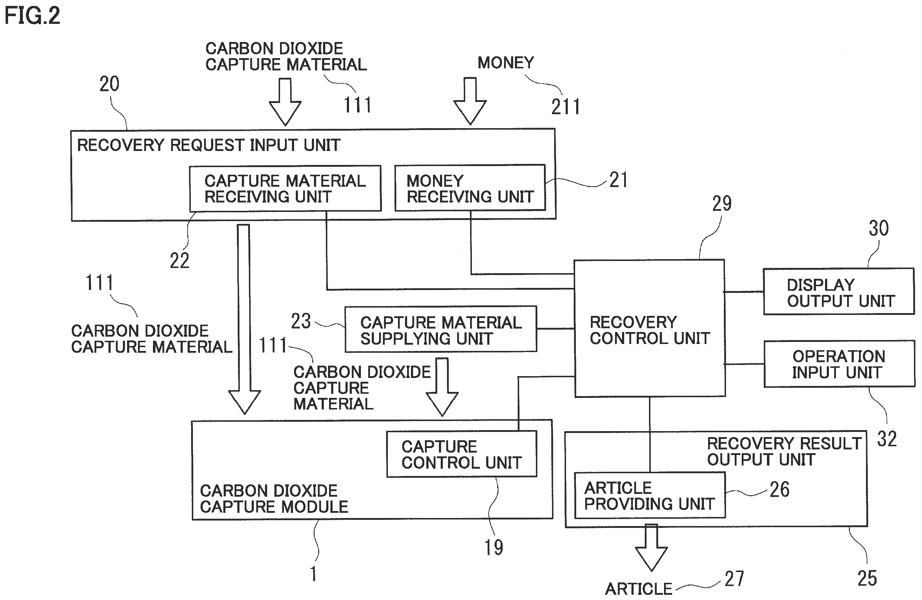

With reference to Fig. 1 to Fig. 5, a carbon dioxide recovery device 100 (hereinafter sometimes simply referred to as a "recovery device 100") of a first embodiment is described. Recovery device 100 recovers carbon dioxide. Fig. 1 is a schematic perspective view explaining a configuration of recovery device 100 of the first embodiment. Fig. 2 is a block diagram explaining an internal structure of recovery device 100 of the first embodiment. Recovery device 100 includes a carbon dioxide capture module 1 (hereinafter sometimes simply referred to as a "capture module 1"), a recovery request input unit 20, a recovery result output unit 25, and a recovery control unit 29. Capture module 1 captures carbon dioxide. Recovery request input unit 20 receives input of a recovery request of carbon dioxide input by a requester. Recovery result output unit 25 outputs a recovery result of capture module 1. Recovery control unit 29 causes recovery result output unit 25 to output the recovery result based on the recovery request from recovery request input unit 20. One of features of recovery device 100 resides in that recovery device 100 includes specific capture module 1.

### [Carbon Dioxide Capture Module]

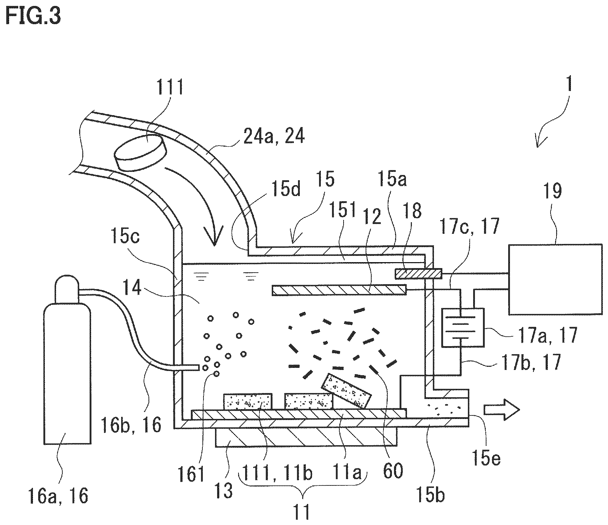

Fig. 3 is a schematic configuration view as a configuration example of capture module 1 included in recovery device 100 of the first embodiment. Capture module 1 uses, as illustrated in Fig. 3, a carbon dioxide capture material 111 (hereinafter sometimes simply referred to as a "capture material 111") in a solution 14 to fix carbon dioxide 161 to a capture product 60 to recover carbon dioxide 161. Capture module 1 includes a voltage applying mechanism 17 that applies a voltage to capture material 111. As illustrated in Fig. 1, capture module 1 is disposed in a casing 40 of recovery device 100. A portion of a front surface of casing 40 facing capture module 1 may be configured of a transparent panel. In this manner, an operating state of capture module 1 can be visually observed from the outside of casing 40. As illustrated in Fig. 3, capture module 1 in this example includes a first electrode 11, a magnet 13, a second electrode 12, solution 14, a storage tank 15, a gas supplying unit 16, voltage applying mechanism 17, a sensor unit 18, and a capture control unit 19. Capture module 1 in this example may further include at least one of a discharging mechanism, a solution adjusting mechanism, and a dissolution promoting mechanism which are all not shown.

### (First Electrode)

First electrode 11 is a working electrode. First electrode 11 is connected to a power supply 17a via a conductive wire 17b. First electrode 11 is immersed in solution 14. First electrode 11 includes capture material 111 containing a first metal that has iron as a main constituent. The first metal that has iron as a main constituent means that the proportion of iron included in the first metal is 50% by mass or more when the entire first metal is 100% by mass. The proportion of iron included in the first metal may be 60% by mass or more, or 70% or more. The first metal is pure iron or an iron alloy. The iron alloy is a metal containing at least one element selected from the group consisting of manganese, chromium, molybdenum, aluminum, copper, zinc, and nickel in addition to iron. Unlike this example, the first metal may have an iron compound as a main constituent. Examples of the iron compound include iron (II) hydroxide and iron (II) hexacyanoferrate (II). First electrode 11 may include capture material 111 made of any one type of pure iron, an iron alloy, and an iron compound, or may include two or more types of capture materials 111.

When a voltage is applied across first electrode 11 and second electrode 12 by voltage applying mechanism 17 described later, divalent iron ions are eluted from the first metal included in capture material 111 into solution 14. Those divalent iron ions react with carbonate ions (CO₃²⁻) or bicarbonate ions (HCO₃⁻) present in solution 14, and thus iron carbonate or iron bicarbonate is deposited in solution 14. With this reaction, carbon dioxide 161 is captured. This iron carbonate or iron bicarbonate is capture product 60. Capture product 60 precipitates in solution 14.

A process by which iron carbonate is produced in solution 14 is considered to be an electrochemical reaction shown below.

Carbon dioxide 161 supplied into solution 14 produces carbonate ions and hydrogen ions.

CO₂+H₂O→CO₃²⁻+2H⁺

In first electrode 11, iron becomes divalent iron ions and releases electrons.

Fe→Fe²⁺+2e⁻

In second electrode 12, the hydrogen ions and the electrons combine to become hydrogen.

2H⁺+2e⁻→H₂

In solution 14, the carbonate ions and the iron ions combine to produce iron carbonate.

Fe²⁺+CO₃²⁻→FeCO₃

Capture material 111 in this example is a pressed powder compact containing a powder made of the first metal, or a sintered material made of the first metal. The pressed powder compact is formed by pressurizing a powder. The sintered material is formed by sintering a pressed powder compact. Unlike this example, capture material 111 may be an ingot material or the like, or may be an iron scrap obtained by, for example, crushing various iron materials to a processable size.

An average particle size of the powder included in the pressed powder compact may be, for example, 1 µm or more and 2,000 µm or less. When the average particle size of the powder is 1 µm or more, the capture efficiency of carbon dioxide is more easily improved. When the average particle size of the powder is 2,000 µm or less, the powder is easy to handle. The average particle size of the powder may further be 25 µm or more and 1,000 µm or less, and may particularly be 50 µm or more and 200 µm or less.

The average particle size of the powder can be obtained as follows. The cross section of the pressed powder compact is observed with an SEM (scanning electron microscope) to acquire an observation image. The cross section of the compact is any cross section. The magnification of the SEM is 1,000 times or more and 30,000 times or less. The number of observation images to be acquired is three or more. The total cross-sectional area is 30 µm² or more. One observation image may be acquired for one cross section, or a plurality of observation images may be acquired for one cross section. Each of the acquired observation images is subjected to image processing to extract the contour of each particle. Examples of the image processing include binarization processing. A diameter of a perfect circle having an area equal to the area of each particle is obtained. The average value of the diameters of all of the perfect circles is the average particle size of the powder. The number of measured particles is ten or more.

First electrode 11 in this example includes an electrode base 11a and an electrode piece 11b. Electrode base 11a is made of carbon or a metal having a lower ionization tendency than the first metal. Examples of the metal having a lower ionization tendency than the first metal include copper and platinum. Electrode base 11a in this example is made of copper. The shape of electrode base 11a is not particularly limited and can be selected as appropriate. The shape of electrode base 11a in this example is a flat plate shape. Conductive wire 17b is connected to electrode base 11a. Electrode base 11a in this example is disposed in contact with an inner surface of a bottom portion 15b of a container described later. Electrode piece 11b is provided on a surface of electrode base 11a. Electrode piece 11b in this example is in contact with an upper surface of electrode base 11a. The number of electrode pieces 11b may be one or more. Electrode piece 11b is capture material 111 described above. The shape of capture material 111 is not particularly limited and can be selected as appropriate. Capture material 111 has, for example, a coin shape.

### (Magnet)

Magnet 13 attracts capture material 111 to bring capture material 111 into contact with electrode base 11a. Magnet 13 in this example is disposed in contact with an outer surface of bottom portion 15b of the container. Unlike this example, magnet 13 may be disposed in contact with the inner surface of bottom portion 15b of the container. That is, magnet 13 may be disposed between the lower surface of electrode base 11a and the inner surface of bottom portion 15b of the container. When magnet 13 is disposed so as to be immersed in solution 14, it is preferable that a resin coating or a plated layer of a metal having a lower ionization tendency than second electrode 12 be formed on the surface of magnet 13.

### (Second Electrode)

Second electrode 12 is a counter electrode. Second electrode 12 is connected to power supply 17a via a conductive wire 17c. Second electrode 12 is immersed in solution 14. Second electrode 12 contains carbon or a second metal having a lower ionization tendency than the first metal. The second metal is, for example, copper or platinum. Second electrode 12 in this example is made of the same material as electrode base 11a. That is, second electrode 12 in this example is made of copper. The shape of second electrode 12 is not particularly limited and can be selected as appropriate. The shape of second electrode 12 in this example is a flat plate shape.

### (Solution)

In solution 14, first electrode 11 and second electrode 12 are immersed. That is, solution 14 covers first electrode 11 and second electrode 12. Solution 14 is stored in storage tank 15. Gas containing carbon dioxide 161 is supplied to solution 14 from gas supplying unit 16. Part of carbon dioxide 161 supplied to solution 14 is converted into carbonate ions or bicarbonate ions.

The pH of solution 14 and the potential of capture material 111 may be controlled to fall within a range in which divalent iron ions or divalent iron hydroxide becomes stable in the potential-pH diagram. That is, the pH of solution 14 and the potential of capture material 111 may be controlled so as to increase the content percentage of divalent iron ions or divalent iron hydroxide in solution 14. With such control, the capture efficiency of carbon dioxide 161 is more easily improved. It is to be noted that the "potential-pH diagram" here refers to the potential-pH diagram of iron in solution 14 at 25°C.

The pH of solution 14 may be, for example, 0 or more and less than 12. When the pH of solution 14 is 0 or more, iron carbonate easily precipitates. When the pH of solution 14 is less than 12, iron hydroxide is less likely to precipitate. The pH of the solution may further be 0 or more and 9 or less, or may particularly be 0 or more and 6 or less.

The temperature of solution 14 may be, for example, 4°C or more and less than 200°C. When the temperature of solution 14 is 4°C or more, the dissolving amount of carbon dioxide is large. When the temperature of solution 14 is less than 200°C, iron carbonate is less likely to be thermally decomposed. The temperature of the solution 14 may further be 15°C or more and 150°C or less, or may particularly be 25°C or more and 99°C or less.

Solution 14 contains water as a solvent. Solution 14 may contain a carbonate as a supply source of carbon dioxide. The carbonate produces carbonate ions by being dissolved in the solution. Examples of the carbonate include sodium carbonate, sodium bicarbonate, and potassium carbonate. Solution 14 may further include a solution adjuster. The solution adjuster is, for example, at least one selected from the group consisting of an acidic substance, a dissolution promoter, a pH buffer (buffer), a carbonation promoter, a reducing agent, a sequestering agent, and a builder.

The acidic substance decreases the pH of solution 14. The acidic substance is preferred to be a substance that has a smaller chelating effect than citric acid. The acidic substance is a salt that exhibits acidity in solution 14. Examples of the salt that exhibits acidity in solution 14, that is, a salt that exhibits acidity by being dissolved in solution 14 include sodium hydrogen sulfate, ammonium hydrogen sulfate, sodium dihydrogen phosphate, iron (II) sulfate, and iron (II) chloride. With solution 14 containing the acidic substance, a state in which the divalent iron ions in solution 14 are increased is easily maintained, and hence the capture efficiency of carbon dioxide 161 is less likely to decrease.

The dissolution promoter promotes the dissolution of carbon dioxide 161 into solution 14. Examples of the dissolution promoter include carbonic anhydrase. The carbonic anhydrase promotes production of bicarbonate ions. With solution 14 containing the dissolution promoter, the amount of carbon dioxide 161 in solution 14 is easily increased, and hence the capture efficiency of carbon dioxide 161 is easily improved.

The pH buffer makes it easier to maintain the pH of solution 14 at a desired value. Examples of the pH buffer include sodium tartrate, sodium acetate, sodium borate, sodium citrate, ammonium chloride, and sodium phosphate. With solution 14 containing the pH buffer, a state in which the ratio of the divalent iron ions in solution 14 is increased is easily maintained, and hence the capture efficiency of carbon dioxide 161 is less likely to decrease.

The carbonation promoter promotes the carbonation of the divalent iron ions eluted from capture material 111. The shape of the carbonation promoter is not particularly limited and can be selected as appropriate. The carbonation promoter has, for example, a particulate shape. The carbonation promoter has iron carbonate or iron bicarbonate as a main constituent. The carbonation promoter may serve as seed crystals for carbonating the divalent iron ions. With solution 14 containing the carbonation promoter, the capture efficiency of carbon dioxide 161 is easily improved.

The reducing agent, the sequestering agent, and the builder inhibit the oxidation of the divalent iron ions in solution 14. Examples of the reducing agent include polyphenols such as catechin and chlorogenic acid. Examples of the sequestering agent include citric acid and gluconic acid. Examples of the builder include a carbonate, a silicate, an aluminosilicate, a sulfate, and carboxymethylcellulose (CMC). With solution 14 containing the reducing agent, the sequestering agent, or the builder, the state in which the ratio of the divalent iron ions in solution 14 is increased is easily maintained, and hence the capture efficiency of carbon dioxide 161 is less likely to decrease.

### (Storage Tank)

Storage tank 15 stores solution 14. First electrode 11 and second electrode 12 are disposed inside of storage tank 15. Storage tank 15 includes a supply port 15d and a discharge port 15e. Supply port 15d is an opening portion through which solution 14 and capture material 111 are loaded from the outside of storage tank 15 to the inside thereof. Supply port 15d is provided, for example, in a ceiling portion 15a of storage tank 15. Supply port 15d in this example is always open. With supply port 15d being always open, gas that rises in solution 14 and is released from the liquid surface of solution 14 is discharged from supply port 15d to the outside of storage tank 15. Therefore, a pressure of a gas phase portion 151 of storage tank 15, that is, a pressure of the gas in contact with solution 14 is reduced, and hence the content percentage of dissolved oxygen in solution 14 is easily reduced. Thus, the oxidation action due to the dissolved oxygen in solution 14 is reduced, and the state in which the ratio of the divalent iron ions in solution 14 is increased is easily maintained. Unlike this example, supply port 15d may be provided with a lid portion that can be opened and closed. When supply port 15d is closed by the lid portion, the gas is not discharged to the outside of storage tank 15. Therefore, the pressure increases, and the production of capture product 60 is easily promoted. Discharge port 15e is an opening portion through which solution 14 and produced capture product 60 are discharged from the inside of storage tank 15 to the outside thereof. Discharge port 15e is provided, for example, in a lower portion of a side wall portion 15c of storage tank 15. Discharge port 15e is connected to a first discharge pipe of the discharging mechanism (not shown) described later.

### (Gas Supplying Unit)

Gas supplying unit 16 supplies carbon dioxide 161 to solution 14. Gas supplying unit 16 includes, for example, a carbon dioxide tank 16a that is a supply source of carbon dioxide 161, a first pipe 16b that connects carbon dioxide tank 16a and a liquid phase portion of storage tank 15, and a valve provided in first pipe 16b. Carbon dioxide tank 16a is also called a carbon dioxide cylinder. Carbon dioxide in carbon dioxide tank 16a is preferred to be, for example, carbon dioxide recovered from an exhaust gas produced by combustion of fossil fuels. With the use of the carbon dioxide recovered in advance as a supply source, the carbon dioxide in the atmosphere is indirectly reduced. A carbon dioxide tank of a generally distributed standard can be used for carbon dioxide tank 16a. A carbon dioxide tank of a generally distributed standard can be easily obtained from various business operators. The concentration of carbon dioxide in carbon dioxide tank 16a is only required to be, for example, 10% by volume or more, and is not limited. The concentration of carbon dioxide in carbon dioxide tank 16a is preferred to be 80% by volume or more, or 100% by volume or more. First pipe 16b is a flow path for carbon dioxide 161 from carbon dioxide tank 16a to the liquid phase portion. The valve is provided to adjust the flow rate of carbon dioxide 161 supplied to the liquid phase portion. The flow rate may be adjusted by capture control unit 19. Although not shown, gas supplying unit 16 may further include a flow rate sensor that detects the flow rate. The flow rate sensor is a commercially available flow rate sensor. Information from the flow rate sensor is transmitted to capture control unit 19.

### (Voltage Applying Mechanism)

Voltage applying mechanism 17 applies a voltage across first electrode 11 and second electrode 12. The voltage is applied so that a current flows between first electrode 11 and second electrode 12. When a current flows, divalent iron ions are easily eluted from capture material 111 included in first electrode 11. Voltage applying mechanism 17 includes power supply 17a, conductive wire 17b connecting power supply 17a and first electrode 11, and conductive wire 17c connecting power supply 17a and second electrode 12. The voltage value can be selected as appropriate based on the flow rate of carbon dioxide 161, the temperature of solution 14, the pH value of solution 14, or the like. The voltage value is, for example, 1 mV or more and 2 V or less, further 10 mV or more and 1.6 V or less, or particularly 100 mV or more and 1.2 V or less. When the voltage value is 1 mV or more, the production of capture product 60 is easily promoted. When the voltage value is 2 V or less, the reaction between the divalent iron ions and the carbonate ions is less likely to become unstable. Although not shown, voltage applying mechanism 17 may include a voltage adjusting unit that turns the voltage on and off and adjusts the voltage value. Capture control unit 19 controls the voltage adjusting unit.

### (Sensor Unit)

Sensor unit 18 detects at least one selected from the group consisting of the carbon dioxide concentration of solution 14, the temperature of solution 14, the pH value of solution 14, the turbidity of solution 14, the amount of capture product 60 produced by capture module 1, the value of a voltage across first electrode 11 and second electrode 12, and the value of a current flowing between first electrode 11 and second electrode 12. A commercially available sensor capable of measuring each of the carbon dioxide concentration of solution 14, the temperature of solution 14, the pH value of solution 14, the turbidity of solution 14, the amount of capture product 60, the voltage value, and the current value can be used for detection thereof. The detection result of sensor unit 18 is transmitted to capture control unit 19.

### (Capture Control Unit)

Capture control unit 19 performs various processes required for the operation of capture module 1. Capture control unit 19 controls the operation of voltage applying mechanism 17 based on the detection result of sensor unit 18. Capture control unit 19 controls the timing to start and end voltage application by the voltage adjusting unit included in voltage applying mechanism 17. The voltage application starts after capture material 111 is loaded into storage tank 15 as described later. The voltage application may start, for example, when the carbon dioxide concentration of solution 14 becomes a predetermined value or more after capture material 111 is loaded. When the captured amount of carbon dioxide 161 is increased, that is, the produced amount of capture product 60 is increased due to the application of the voltage, the temperature of solution 14, the pH value of solution 14, the turbidity of solution 14, the amount of capture product 60, the current value, and the like change. It is preferable to obtain in advance a correlation between the weight of capture material 111 and each of the temperature of solution 14, the pH value of the of solution 14, the turbidity of solution 14, and the current value at the time point when the production reaction of entire capture product 60 is completed, and store the correlation as a table in a storage unit of capture control unit 19. The application of the voltage may be ended based on the correlation. Further, capture control unit 19 may end the application of the voltage after a predetermined time has elapsed from the start of the application of the voltage, without using sensor unit 18.

Capture control unit 19 may control the opening and closing of a valve of the discharging mechanism described later based on a detection result of sensor unit 18. For example, when the amount of capture product 60 is equal to or more than a predetermined value, when a temperature of an electrolyte is equal to or more than a predetermined value, or when the turbidity of solution 14 is equal to or more than a predetermined value, the valve of the discharging mechanism may be opened so that solution 14 flows to the first discharge pipe described later. Otherwise, the valve of the discharging mechanism is kept closed so that solution 14 is prevented from flowing to the first discharge pipe described later. Capture control unit 19 may control the opening and closing of a valve of gas supplying unit 16 based on a detection result of the flow rate sensor described above. Capture control unit 19 may control the start and end of supply of the solution adjusting mechanism described later based on a detection result of the pH value of solution 14.

### (Discharging Mechanism)

The discharging mechanism (not shown) is connected to discharge port 15e, and is used to take out solution 14 and capture product 60 from storage tank 15. The discharging mechanism is preferred to include, for example, a filter, a tank, the first discharge pipe, a second discharge pipe, and a valve. The filter filters solution 14 in storage tank 15. Capture product 60 included in solution 14 is extracted by filtering solution 14. The tank stores a filtrate. The first discharge pipe connects discharge port 15e of storage tank 15 and the filter. The second discharge pipe connects the filter and the tank. The valve opens and closes the first discharge pipe. When the first discharge pipe is closed by the valve, solution 14 in storage tank 15 is prevented from flowing through the first discharge pipe. When the first discharge pipe is opened by the valve, solution 14 in storage tank 15 flows through the first discharge pipe. The filtrate flows to the tank through the second discharge pipe. It is to be noted that the filtrate may be returned to storage tank 15 by a separately provided pump without being stored in the tank. In this case, the second discharge pipe connects the filter and storage tank 15. The minimum configuration of the discharging mechanism is the valve provided at discharge port 15e of storage tank 15. When the discharging mechanism is only a valve, capture product 60 stored in storage tank 15 is recovered at the time of inspection by an operator described later.

### (Solution Adjusting Mechanism)

The solution adjusting mechanism (not shown) supplies, for example, at least one selected from the group consisting of the acidic substance, the reducing agent, the sequestering agent, and the builder described above to solution 14. The solution adjusting mechanism supplies, for example, the acidic substance described above to solution 14 when the pH of solution 14 rises. The solution adjusting mechanism supplies, for example, at least one of the reducing agent, the sequestering agent, and the builder to suppress oxidation of divalent iron ions in solution 14. The upper limit of the pH of solution 14 at which the solution adjusting mechanism starts to supply the acidic substance described above may be 6.0, 5.0, 4.0, or 3.0. With the solution adjusting mechanism, the state in which the divalent iron ions in solution 14 are increased is easily maintained, and hence the capture efficiency of carbon dioxide 161 is easily maintained.

### (Dissolution Promoting Mechanism)

The dissolution promoting mechanism (not shown) promotes the dissolution of carbon dioxide 161 into solution 14 as described above. With the capture module 1 including the dissolution promoting mechanism, the amount of carbon dioxide 161 in solution 14 is easily increased. This further improves the capture efficiency of carbon dioxide 161. The dissolution promoting mechanism includes, for example, at least one of a bubble generating device capable of generating fine bubbles such as nanobubbles or microbubbles in solution 14, an ultrasonic generating device capable of generating cavitation bubbles in solution 14, and a temperature and pressure control device capable of lowering the water temperature of solution 14 and increasing a partial pressure of carbon dioxide 161.

### [Recovery Request Input Unit]

Recovery request input unit 20 illustrated in Fig. 2 inputs a recovery request for carbon dioxide input by a requester. The recovery request is input by the requester by any one of inputting money 211 by settlement with cash, credit card, or electronic money, and loading capture material 111. Recovery request input unit 20 in this example includes a money receiving unit 21 and a capture material receiving unit 22 as illustrated in Fig. 1.

Money receiving unit 21 includes a bill inserting port 21a through which bills are inserted and a coin inserting port 21b through which coins are inserted, although not shown, a counting device that detects the type and amount of bills and coins that have passed through bill inserting port 21a and coin inserting port 21b, and a reading unit 21c that reads contactless IC (integrated circuit) cards such as credit cards or smartphones. Bill inserting port 21a, coin inserting port 21b, and reading unit 21c are provided on the front side of casing 40. As the counting device that detects the type of bills and coins, a counting device that detects the type of bills and coins and is installed in a general vending machine can be used. As reading unit 21c, a reading panel or the like that is installed in a general vending machine can be used.

Capture material receiving unit 22 has a capture material loading port 22a through which capture material 111 is loaded, and, although not shown, a sensor unit that detects the quantity or weight of loaded capture material 111. Capture material loading port 22a is provided on the front side of casing 40. Capture material 111 loaded through capture material loading port 22a is loaded into capture module 1 by a capture material loading mechanism 24 described later. Capture material 111 loaded through capture material loading port 22a has, for example, a coin shape. A commercially available weight sensor or the like can be used to detect the quantity or weight of capture material 111.

### [Capture Material Supplying Unit]

Although not shown, a capture material supplying unit 23 illustrated in Fig. 2 includes a capture material storage unit in which a plurality of capture materials 111 are stored. Capture material supplying unit 23 includes capture material loading mechanism 24 that loads capture material 111 into capture module 1 as illustrated in Fig. 3. It is to be noted that Fig. 3 illustrates only a chute 24a connected to supply port 15d of storage tank 15 as the minimum configuration of capture material loading mechanism 24. Chute 24a is a passage that slides and moves capture material 111 from the capture material storage unit and capture material loading port 22a to supply port 15d of capture module 1. Capture material loading mechanism 24 may include other elements required for loading capture material 111 into capture module 1, and is not particularly limited as long as loading can be achieved by a known mechanism. Examples of the other elements include an electric support lever for use in dropping capture materials 111 one by one from the capture material storage unit. The capture material storage unit is provided inside of casing 40. Capture material 111 stored in the capture material storage unit is capture material 111 produced in advance. Each capture material 111 stored in the capture material storage unit is preferred to be, for example, a coin-shaped pressed powder compact or sintered material.

Capture material 111 loaded by capture material loading mechanism 24 is capture material 111 stored in the capture material storage unit or capture material 111 loaded from capture material loading port 22a. When the recovery request is made by money receiving unit 21, an amount of capture material 111 corresponding to the amount of payment is loaded from the capture material storage unit into capture module 1 by capture material loading mechanism 24. Capture material 111 loaded into capture module 1 constitutes a part of first electrode 11. In this example, capture material 111 attracted to the surface of electrode base 11a by magnet 13 described above constitutes electrode piece 11b.

### [Recovery Result Output Unit]

Recovery result output unit 25 illustrated in Fig. 2 outputs a recovery result corresponding to the input recovery request. The recovery result is typically the amount of carbon dioxide that can be captured by capture material 111 loaded into capture module 1. The recovery result may also be an amount of capture product 60 produced by capture module 1. Although not shown, recovery result output unit 25 includes an article storage unit in which a plurality of articles 27 are stored. Stored articles 27 are tangible objects produced in advance. The output of the recovery result includes the provision of stored article 27.

Article 27 in this example includes capture product 60 produced in advance by capture module 1. Article 27 may be made of a composite material including, for example, capture product 60 and resin in which capture product 60 is embedded. The composite material is preferred to have capture product 60 as a main constituent. Having capture product 60 as a main constituent means that the percentage of capture product 60 is 50% by mass or more of the composite material when the entire composite material is 100% by mass. An example of article 27 in this example is a card 28 made of the composite material, as illustrated in Fig. 1. Card 28 includes, for example, on its surface, a one-dimensional code or a two-dimensional code that represents operation information including the recovery result. The operation information is information that includes identification information of recovery device 100, the operation date and time, the operation time, and the like in addition to the recovery result. The one-dimensional code is, for example, a barcode. The two-dimensional code is, for example, a QR code (registered trademark). Card 28 in this example includes a QR code 28a.

Unlike this example, the composite material may be a decorative part for personal ornaments, daily supplies, or the like. Examples of the decorative part for personal ornaments include accessories such as a ring, a necklace, and a pendant. Examples of the daily supplies include kitchen supplies such as a spoon and a fork. Unlike this example, provided article 27 is not required to include capture product 60. Further, an object that does not include capture product 60 may be provided separately from provided article 27. The object that does not include capture product 60 is, for example, a paper medium on which a one-dimensional code or a two-dimensional code is printed.

Recovery result output unit 25 in this example includes an article providing unit 26 that provides article 27 corresponding to the recovery result of capture module 1, as illustrated in Fig. 1. Article providing unit 26 is not particularly limited as long as article providing unit 26 is configured to provide article 27. Article providing unit 26 includes, for example, a transport mechanism that transports article 27 from an article storage unit (not shown), and a take-out port 26a through which article 27 is discharged as illustrated in Fig. 1. As the transport mechanism, a transport mechanism of a general vending machine for card 28 can be used. Take-out port 26a is provided on the front side of casing 40.

### [Recovery Control Unit]

Recovery control unit 29 illustrated in Fig. 2 is a control device that performs each process required for the operation of recovery device 100. Recovery control unit 29 controls each unit of recovery device 100 to perform a series of operations based on the recovery request from recovery request input unit 20.

Further, recovery control unit 29 is preferred to have a communication function. With recovery control unit 29 having the communication function, information can be transmitted to and received from an external device. Further, with the communication function, credit card payments and electronic money processing can be performed in recovery request input unit 20.

The basic processing of recovery control unit 29 is described. Recovery control unit 29 detects the reception of the request from recovery request input unit 20. When the reception of the request is detected, recovery control unit 29 gives an instruction to supply capture material 111 to capture module 1. When the request reception is a signal from capture material receiving unit 22, capture material supplying unit 23 is instructed to directly treat loaded capture material 111 as the object to be processed. When the request reception is a signal from money receiving unit 21, an instruction is output to capture material supplying unit 23 to treat a predetermined amount of capture material 111 corresponding to the amount of money 211 as the object to be processed. In this example, for example, capture material 111 can be supplied by operating the support lever of capture material loading mechanism 24.

Recovery control unit 29 controls the operation of capture module 1. The operation control includes various types of monitoring control required for the operation, such as monitoring the state of capture module 1, supply control from carbon dioxide tank 16a, adjustment of the solution, control of a power supply voltage, and the like. Recovery control unit 29 instructs article providing unit 26 to output article 27. The provision of article 27 includes printing a one-dimensional code or a two-dimensional code. Further, recovery control unit 29 also instructs a display output unit 30 described later to perform various types of display.

### [Display Output Unit]

Recovery device 100 includes display output unit 30 including a display. Recovery control unit 29 instructs display output unit 30 to perform various types of display. Display output unit 30 displays operation guidance of recovery device 100, whether or not capture material 111 has been loaded, the amount of money inserted or paid, the operating state of capture module 1, whether or not recovery device 100 can be used, and the like. Display output unit 30 in this example is a display such as a liquid crystal display. Display output unit 30 is provided on the front side of casing 40. Display output unit 30 may further include a speaker that outputs sound, or a lighting device such as a lamp that outputs light.

### [Inspection Port]

An inspection port 31 illustrated in Fig. 1 is an opening portion for allowing an operator to make access to the inside of casing 40. Inspection port 31 is provided with a door portion that can be opened and closed. Inspection port 31 in this example is provided on a lateral side of casing 40. Through inspection port 31, the operator can inspect and replace capture module 1, inspect and replace carbon dioxide tank 16a, recover and load solution 14, recover capture product 60, supply capture material 111 stored in the capture material storage unit, and the like. The location and size of inspection port 31 are not limited. Inspection port 31 may be a front side door of casing 40.

### [Operation Input Unit]

As illustrated in Fig. 2, recovery device 100 is preferred to include an operation input unit 32 that notifies recovery control unit 29 of the start and end of the inspection work and is for use in inputting various settings and the like. Operation input unit 32 is various input units including switches for maintenance and inspection. Operation input unit 32 is provided inside of casing 40 illustrated in Fig. 1.

### [Capture Material Providing Device]

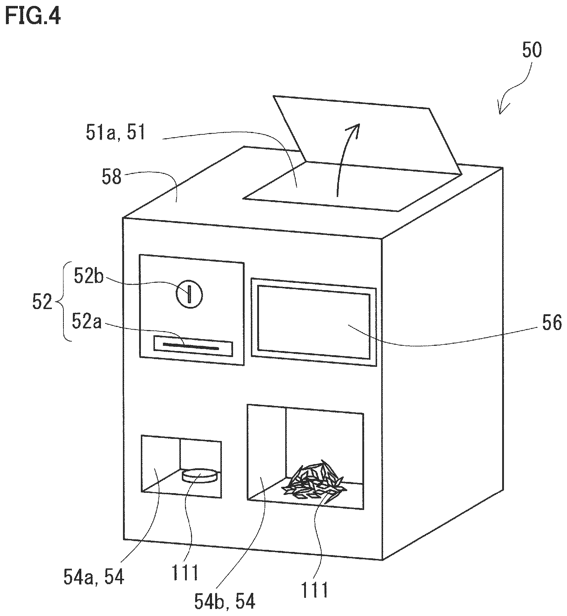

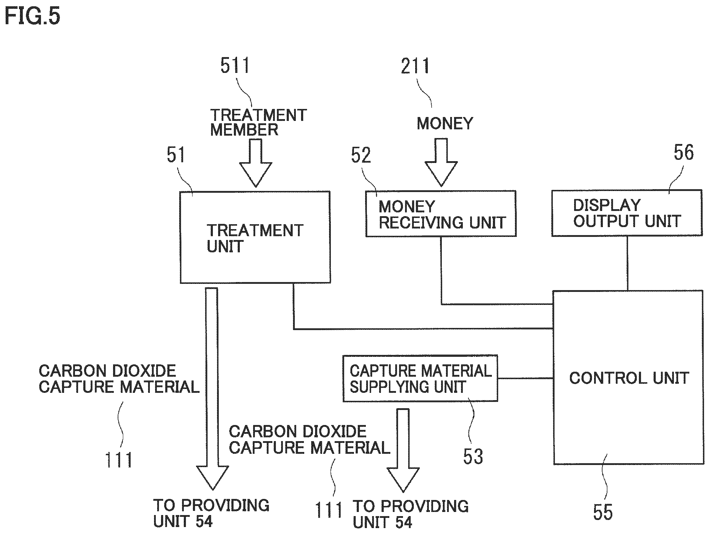

Recovery device 100 may further include a capture material providing device 50 illustrated in Fig. 4 and Fig. 5. Capture material providing device 50 is a device that provides capture material 111 to be loaded into capture module 1. Capture material providing device 50 may be disposed as a separate device outside of casing 40 of recovery device 100 as in this example. Unlike this example, capture material providing device 50 may be disposed inside of casing 40 so as to be integrated with recovery device 100.

As illustrated in Fig. 5, capture material providing device 50 in this example includes a treatment unit 51, a money receiving unit 52, a capture material supplying unit 53, a providing unit 54, a control unit 55, and a display output unit 56. Unlike this example, capture material providing device 50 may be an example in which money receiving unit 52 and capture material supplying unit 53 are not included. Further, capture material providing device 50 may also be an example in which treatment unit 51 is not included.

Treatment unit 51 includes, for example, a loading port 51a as illustrated in Fig. 4. Further, although not shown, treatment unit 51 includes an inspecting unit, a processing unit, and a separating unit inside of a casing 58. A treatment member 511 is loaded through loading port 51a. Loading port 51a may be provided with a lid portion that can open and close loading port 51a. Loading port 51a in this example is provided on the upper surface of casing 58. Treatment member 511 is a raw material to become capture material 111. It is assumed that treatment member 511 is a processing target member containing the first metal. However, treatment member 511 to be loaded may include a non-processing target member containing no first metal. Even when the processing target member is a raw material containing the first metal, the processing target member may be a material larger than a specified size that can be loaded into capture module 1 described above. The inspecting unit inspects whether treatment member 511 is a processing target member or a non-processing target member. The inspecting unit is, for example, a mechanism including a magnet. Depending on whether or not treatment member 511 is attracted to the magnet, whether or not treatment member 511 is the processing target member can be distinguished. The processing unit processes the processing target member. The processing unit is, for example, a crushing machine such as a shredder that can crush metal. Capture material 111 having a size outside of the range of the above-mentioned specified size is processed by the processing unit into capture material 111 having a size falling within the range of the above-mentioned specified size. The separating unit extracts capture material 111 containing the first metal from the crushed mass. The separating unit is, for example, a mechanism including a magnet. Through the operations described above, loaded treatment member 511 is provided from providing unit 54 as capture material 111 containing the first metal. Processing waste containing no first metal is stored in a processing tank in capture material providing device 50.

Money receiving unit 52 includes a bill inserting port 52a and a coin inserting port 52b that are configured in the same manner as bill inserting port 21a and coin inserting port 21b of money receiving unit 21 described above. Although not shown, money receiving unit 52 may further include a reading unit that reads contactless IC cards or smartphones, similarly to recovery device 100.

Although not shown, capture material supplying unit 53 includes a capture material storage unit and a capture material loading mechanism that are the same as the capture material storage unit and capture material loading mechanism 24 of capture material supplying unit 23 described above.

Providing unit 54 has a take-out port 54a through which stored capture material 111 is taken out, and a take-out port 54b through which capture material 111 processed from treatment member 511 is taken out. Each of take-out ports 54a and 54b is opened on the front side of casing 58.

Control unit 55 controls operations of the respective units of capture material providing device 50, such as treatment unit 51, money receiving unit 52, capture material supplying unit 53, and display output unit 56. For example, control unit 55 operates the inspecting unit based on the detection result indicating that treatment member 511 has been loaded. When the inspection result of the inspecting unit indicates that treatment member 511 is the processing target member, control unit 55 operates the processing unit and the separating unit in order. When the inspection result of the inspecting unit indicates that treatment member 511 is the non-processing target member, control unit 55 does not operate the processing unit and the separating unit.

Display output unit 56 displays operation guidance of capture material providing device 50, the amount of inserted money, whether loaded treatment member 511 is the processing target member or the non-processing target member, the estimated time required for the processing unit to complete processing of the processing target member, the fact that the processing target member is being processed by the processing unit, the fact that the processing of the processing target member has been completed, and the like. Display output unit 56 is provided on the front side of casing 58. Display output unit 56 in this example is similar to display output unit 30 described above.

Each process (each function) obtained by capture control unit 19, recovery control unit 29, and control unit 55 is implemented by a processing circuit including one or more processors. The processing circuit may be configured of an integrated circuit or the like in which one or more memories, various analog circuits, and various digital circuits are combined in addition to the one or more processors. The one or more memories store programs (commands) that cause the one or more processors to execute each of the processes. The one or more processors may execute each of the processes in accordance with the program read out from the one or more memories, or may execute each of the processes in accordance with a logic circuit designed in advance to execute each of the processes. The processor may be any of various processors suitable for computer control, such as a CPU, a GPU (Graphics Processing Unit), a DSP (Digital Signal Processor), an FPGA (Field Programmable Gate Array), or an ASIC (Application Specific Integrated Circuit). It is to be noted that the plurality of processors that are physically separated may cooperate with each other to execute each of the processes. For example, the processors respectively mounted on a plurality of computers that are physically separated may cooperate with each other via a network such as a LAN (Local Area Network), a WAN (Wide Area Network), or the Internet to execute each of the processes. The program may be installed into the memory from an external server device or the like via the network, or may be distributed in a state of being stored on a recording medium such as a CD-ROM (Compact Disc Read Only Memory), a DVD-ROM (Digital Versatile Disc Read Only Memory), or a semiconductor memory, and installed into the memory from the recording medium.

### <<Second Embodiment>>

### [Carbon Dioxide Recovery Device]

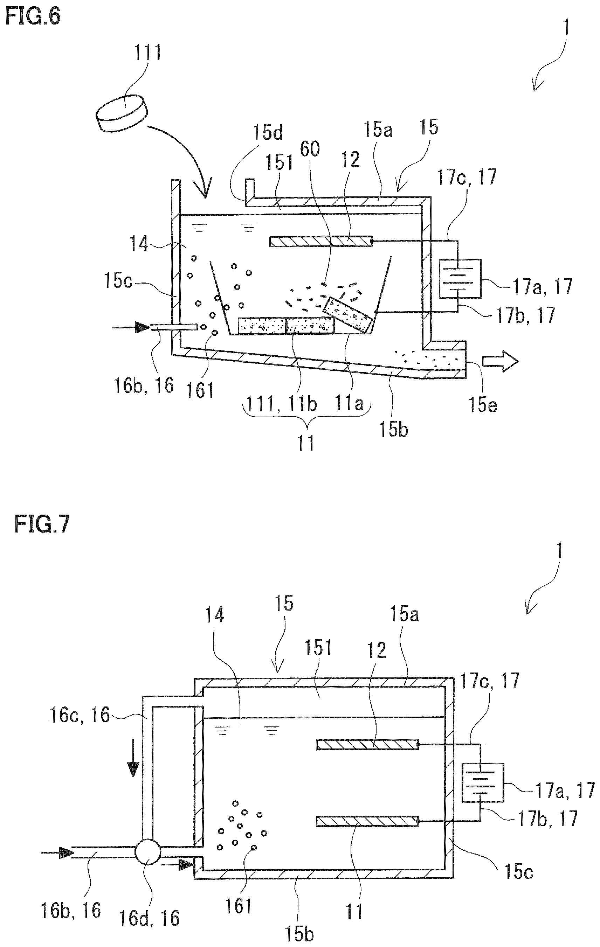

With reference to Fig. 6, a carbon dioxide recovery device of a second embodiment is described. The carbon dioxide recovery device of the second embodiment is different from the first embodiment mainly in the configuration of electrode base 11a included in capture module 1. The following description focuses on the differences from the first embodiment. Description of configurations and effects similar to the first embodiment may be omitted. This point also applies to a third embodiment to a sixth embodiment described later. In Fig. 6, illustration of sensor unit 18, carbon dioxide tank 16a, and capture control unit 19 illustrated in Fig. 3 is omitted.

### [Carbon Dioxide Capture Module]

### (First Electrode)

Electrode base 11a is a mesh member on which electrode piece 11b is placed. The shape of the mesh member in this example is a basket shape. The basket-shaped mesh member easily receives capture material 111 supplied into storage tank 15 through supply port 15d. Therefore, capture material 111 is easily brought into contact with the mesh member. Unlike this example, the shape of the mesh member may be a sheet-shaped porous body. The size of the mesh of the mesh member is only required to be a size that allows capture product 60 to pass therethrough without allowing capture material 111 to pass therethrough. First electrode 11 may further include magnet 13 illustrated in Fig. 3 as in the first embodiment. Magnet 13 makes it easier to bring capture material 111 into contact with electrode base 11a.

### (Storage Tank)

Bottom portion 15b of storage tank 15 is inclined downward toward discharge port 15e. Since bottom portion 15b is inclined, capture product 60 that has passed through the mesh of the mesh member easily flows to discharge port 15e, and hence capture product 60 is easily recovered.

### <<Third Embodiment>>

### [Carbon Dioxide Recovery Device]

With reference to Fig. 7, a carbon dioxide recovery device of the third embodiment is described. The carbon dioxide recovery device of the third embodiment is different from the first embodiment in the configuration of gas supplying unit 16 included in capture module 1. In Fig. 7, illustration of supply port 15d of storage tank 15, discharge port 15e of storage tank 15, sensor unit 18, carbon dioxide tank 16a, and capture control unit 19 illustrated in Fig. 3 is omitted.

### [Carbon Dioxide Capture Module]

### (Gas Supplying Unit)

Gas supplying unit 16 further includes a second pipe 16c and a pump 16d. Second pipe 16c connects gas phase portion 151 of storage tank 15 and first pipe 16b. Second pipe 16c is a flow path for the gas of gas phase portion 151 from gas phase portion 151 to first pipe 16b. Part of carbon dioxide 161 supplied from carbon dioxide tank 16a through first pipe 16b into solution 14 is not used for the reaction with the divalent iron ions and is released from the liquid surface of solution 14. That is, the gas in gas phase portion 151 contains carbon dioxide released from the liquid surface of solution 14.

Pump 16d causes the gas in gas phase portion 151 to flow to second pipe 16c. Pump 16d in this example is a venturi pump provided at a connection portion between second pipe 16c and first pipe 16b. The venturi pump is a pump that utilizes the venturi effect. The venturi pump uses the flow of carbon dioxide in first pipe 16b to suction out gas from second pipe 16c, thereby causing the gas in gas phase portion 151 to flow from gas phase portion 151 to first pipe 16b through second pipe 16c. The gas that has flowed from second pipe 16c to first pipe 16b is supplied to solution 14. The carbon dioxide that has not been used for the reaction with the divalent iron ions and has been released from the liquid surface of solution 14 can be supplied to solution 14, and hence the amount of carbon dioxide in carbon dioxide tank 16a that is used for the reaction with the divalent iron ions can be easily increased. Fig. 7 illustrates a state in which the lid of ceiling portion 15a of storage tank 15 is closed. When gas phase portion 151 is a closed space, the gas in gas phase portion 151 easily flows to second pipe 16c. Unlike this example, pump 16d may be an electric pump provided midway of second pipe 16c.

### <<Fourth Embodiment>>

### [Carbon Dioxide Recovery Device]

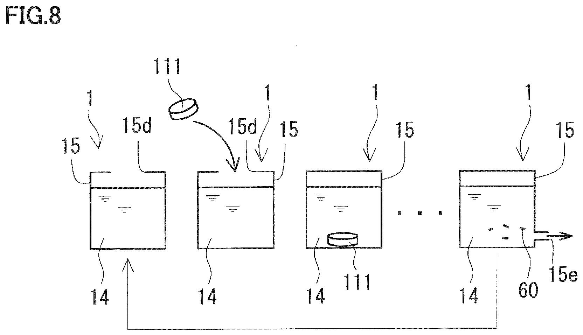

With reference to Fig. 8, a carbon dioxide recovery device of the fourth embodiment is described. The carbon dioxide recovery device of the fourth embodiment is different from the first embodiment in that a plurality of capture modules 1 are circulated. Fig. 8 illustrates capture module 1 illustrated in Fig. 3 in a simple manner.

### [Carbon Dioxide Capture Module]

Capture module 1 includes a drive mechanism that circulates a plurality of storage tanks 15. In the order from left storage tank 15 to right storage tank 15 of Fig. 8, storage tank 15 present at a first position, storage tank 15 present at a second position, storage tank 15 present at a third position, and storage tank 15 present at an n-th position are provided. The number n of storage tanks 15 (n is a natural number) is not limited and can be determined in consideration of the size of the device. Typically, n is 3 or more and 20 or less, and is preferred to be 5 or more and 10 or less. Storage tank 15 present at the first position does not have capture material 111 loaded therein, but has solution 14 stored therein.

The drive mechanism simultaneously moves storage tanks 15 present at the respective positions. Specifically, the drive mechanism moves storage tank 15 present at the first position to the second position, moves storage tank 15 present at the second position to the third position, moves storage tank 15 present at an (n-1)th position to the n-th position, and moves storage tank 15 present at the n-th position to the first position. Capture material 111 is loaded into storage tank 15 that has been moved from the first position to the second position. When capture material 111 is loaded, supply port 15d of storage tank 15 is closed by the lid portion. Capture product 60 is produced while storage tank 15 is sequentially moved from the second position to the n-th position. In storage tank 15 that has been moved to the n-th position, capture product 60 is recovered by, for example, discharging solution 14 from discharge port 15e. Then, the lid portion is opened so that supply port 15d of storage tank 15 that has been moved from the n-th position to the first position is opened. In the description above, an example in which positions of storage tanks 15 themselves are changed in order is described so as to make the circulation of storage tanks 15 easier to understand, but the present disclosure is not limited to this example. For example, there may be employed an example in which, without changing the positions of the plurality of storage tanks 15, the loading position of capture material 111 may be changed in order.

### <<Fifth Embodiment>>

### [Carbon Dioxide Recovery Device]

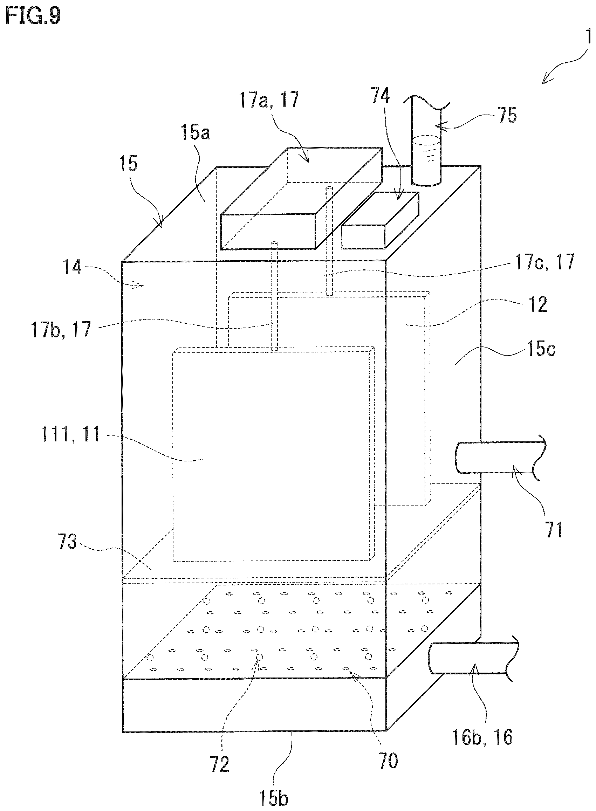

With reference to Fig. 9, a carbon dioxide recovery device of the fifth embodiment is described. The carbon dioxide recovery device of the fifth embodiment is different from the first embodiment mainly in that capture module 1 includes a dissolution promoting mechanism 70 and a solution adjusting mechanism 71 described above, and that solution 14 includes a carbonation promoter 72 described above. In Fig. 9, illustration of sensor unit 18, carbon dioxide tank 16a, and capture control unit 19 illustrated in Fig. 3 is omitted. Although not shown in Fig. 9, capture module 1 in this example may include discharge port 15e of storage tank 15 illustrated in Fig. 3.

### [Carbon Dioxide Capture Module]

### (First Electrode)

First electrode 11 includes capture material 111 having a flat plate shape.

### (Dissolution Promoting Mechanism)

Dissolution promoting mechanism 70 in this example is a bubble generating device capable of generating fine bubbles such as nanobubbles or microbubbles in solution 14. The bubble generating device turns gas containing carbon dioxide into fine bubbles and supplies them to solution 14. The bubble generating device is disposed in a flow path of carbon dioxide to reach storage tank 15 from gas supplying unit 16.

The upper limit of the bubble diameter of the fine bubbles is, for example, 1.0 µm, 0.8 µm, or 0.6 µm. With the bubble diameter of the fine bubbles being set to 1.0 µm or less, the contact area between the carbon dioxide and solution 14 is easily increased. The lower limit of the bubble diameter of the fine bubbles is not particularly limited. The lower limit of the bubble diameter of the fine bubbles is, for example, 0.005 µm. That is, the bubble diameter of the fine bubbles is, for example, 0.005 µm or more and 1.0 µm or less, 0.005 µm or more and 0.8 µm or less, or 0.005 µm or more and 0.6 µm or less. It is to be noted that the term "bubble diameter" means the diameter at the time point of discharge from the bubble generating device.

### (Solution Adjusting Mechanism)

As described above, solution adjusting mechanism 71 supplies at least one selected from the group consisting of an acidic substance, a reducing agent, a sequestering agent, and a builder to solution 14. Solution adjusting mechanism 71 may be controlled by the capture control unit. For example, the capture control unit controls the start of the supply and the stop of the supply of the above-mentioned acidic substance based on the pH of solution 14.

### (Solution)

### <Carbonation Promoter>

Carbonation promoter 72 may be seed crystals for carbonating the divalent iron ions as described above. That is, when crystals of the iron carbonate and the like are grown with the use of carbonation promoter 72 as seed crystals, the capture of the carbonate ions and the like is promoted by iron ions eluted from capture material 111. Further, with carbonation promoter 72 serving as seed crystals, capture material 111 is prevented from being covered with the iron carbonate and the like, and the decrease in activity of capture material 111 due to the coverage can be prevented. Carbonation promoter 72 may be disposed at a distance from capture material 111. With carbonation promoter 72 being disposed at a distance from capture material 111, the iron carbonate and the like using carbonation promoter 72 as seed crystals can be easily recovered. Further, when capture material 111 is not covered with the iron carbonate and the like, the iron carbonate and the like using carbonation promoter 72 as seed crystals can be selectively recovered without recovering capture material 111. In this example illustrated in Fig. 9, carbonation promoter 72 is disposed at a distance from capture material 111 across a porous membrane 73 described later provided in storage tank 15.

### (Porous Membrane)

Porous membrane 73 in this example is provided so as to vertically separate carbonation promoter 72 and capture material 111 in storage tank 15. Porous membrane 73 is disposed below capture material 111 and above carbonation promoter 72. With porous membrane 73, the distance between carbonation promoter 72 and capture material 111 is easily maintained. With carbonation promoter 72 and capture material 111 being separated, the iron carbonate and the like can be easily recovered with the use of carbonation promoter 72 as seed crystals.

Porous membrane 73 may be configured to prevent the iron carbonate and the like from passing therethrough, but allow the carbonate ions and the like to pass therethrough. With the porous membrane 73 preventing the iron carbonate and the like from passing therethrough, it is possible to prevent the iron carbonate and the like from covering capture material 111 with the use of carbonation promoter 72 as seed crystals, and hence it is possible to further prevent the activity of capture material 111 from decreasing. With porous membrane 73 allowing the carbonate ions and the like to pass therethrough, the supply of the carbonate ions and the like to capture material 111 is easily promoted.

The lower limit of the average pore size of porous membrane 73 is, for example, 0.38 nm, 0.50 nm, or 1.00 nm. When the average pore size is 0.38 nm or more, the carbonate ions and the like can easily pass through porous membrane 73. The upper limit of the average pore size is, for example, 20 nm, 15 nm, or 10 nm. When the average pore size is 20 nm or less, the passage of the iron carbonate and the like is easily prevented. That is, the average pore size is, for example, 0.38 nm or more and 20 nm or less, 0.50 nm or more and 15 nm or less, or 1.00 nm or more and 10 nm or less.

Capture module 1 in this example may further include at least one of a display mechanism 74 and a degassing promoting mechanism 75.

### (Display Mechanism)

Display mechanism 74 displays the decrease in activity of capture material 111. When capture module 1 includes display mechanism 74, an environment of solution 14 is easily controlled so as to maintain the capture efficiency of carbon dioxide.

The pH of solution 14 correlates with the activity of capture material 111. For example, when the pH is 4 or more, the activity of capture material 111 may decrease due to the decrease in amount of divalent iron ions eluted from capture material 111. Therefore, display mechanism 74 may include a pH indicator or a pH meter. More specifically, display mechanism 74 may include the pH indicator supplied to solution 14 or the pH meter capable of measuring the pH of solution 14. By displaying the pH of solution 14 with the pH indicator or the pH meter, the decrease in activity of capture material 111 can be displayed.

### <pH Indicator>

As the pH indicator, one that can display the decrease in activity of capture material 111 can be used. Examples of the pH indicator include thymol blue, methyl orange, methyl red, bromocresol purple, bromothymol blue (BTB), phenol red, and neutral red.

The dissolution rate of carbon dioxide in solution 14 may be the carbonation rate of capture material 111 or less. With this configuration, capture material 111 can more reliably capture the carbon dioxide supplied from gas supplying unit 16. The upper limit of the ratio of the content percentage (ppm by volume) of carbon dioxide in the gas released from solution 14 to the content percentage (ppm by volume) of carbon dioxide in the gas supplied from gas supplying unit 16 is, for example, 0.8, 0.6, or 0.4. When the ratio is 0.8 or less, capture material 111 can more reliably capture the carbon dioxide supplied from gas supplying unit 16. The lower limit of the ratio is not particularly limited. The lower limit of the ratio is, for example, 0.1. That is, the ratio is, for example, 0.1 or more and 0.8 or less, 0.1 or more and 0.6 or less, or 0.1 or more and 0.4 or less. The gas released from solution 14 is the gas discharged from degassing promoting mechanism 75 described later.

### (Degassing Promoting Mechanism)

Degassing promoting mechanism 75 discharges gas that has risen in solution 14 and has been released from the liquid surface of solution 14 to the outside of storage tank 15. Therefore, degassing promoting mechanism 75 can reduce the pressure of the gas phase portion of storage tank 15, that is, the pressure of the gas in contact with solution 14, and hence the content percentage of the dissolved oxygen of solution 14 is easily reduced. Thus, the oxidation action caused by the dissolved oxygen in solution 14 is reduced, and the state in which the ratio of the divalent iron ions in solution 14 is increased is easily maintained. Degassing promoting mechanism 75 in this example is provided on ceiling portion 15a.

Instead of reducing the pressure of the gas in contact with solution 14, degassing promoting mechanism 75 may blow in gas other than oxygen so as to reduce a partial pressure of oxygen in the gas. Examples of such gas include nitrogen.

### <<Sixth Embodiment>>

### [Carbon Dioxide Recovery Device]

Although not shown, a carbon dioxide recovery device of the sixth embodiment is a temperature and pressure control device in which the dissolution promoting mechanism adjusts the temperature of the solution and the partial pressure of carbon dioxide. It is to be noted that the dissolution promoting mechanism may include the temperature and pressure control device in addition to the above-mentioned bubble generating device.

The lower limit of the partial pressure of carbon dioxide in the gas supplied from the gas supplying unit into the storage tank is, for example, 4.0×10⁻⁵ MPa, 6.0×10⁻⁵ MPa, or 8.0×10⁻⁵ MPa. When the partial pressure is 4.0×10⁻⁵ MPa or more, the capture efficiency of carbonate ions and the like by the carbon dioxide capture material is easily improved. The upper limit of the partial pressure is not particularly limited. The upper limit of the partial pressure is, for example, 1.0×10⁻¹ MPa. That is, the partial pressure is, for example, 4.0×10⁻⁵ MPa or more and 1.0×10⁻¹ MPa or less, 6.0×10⁻⁵ MPa or more and 1.0×10⁻¹ MPa or less, or 8.0×10⁻⁵ MPa or more and 1.0×10⁻¹ MPa or less.

The upper limit of the temperature of the solution is, for example, 99°C or 95°C. When the temperature is 99°C or less, the solution is easy to handle. The lower limit of the temperature is, for example, 25°C, 50°C, 70°C, or 90°C. When the temperature is 25°C or more, the capture efficiency of carbonate ions and the like by the carbon dioxide capture material is easily improved. That is, the temperature is, for example, 25°C or more and 99°C or less, 50°C or more and 99°C or less, 70°C or more and 99°C or less, 90°C or more and 99°C or less, or 90°C or more and 95°C or less.

Hereinabove, several embodiments of the present disclosure have been described by means of examples. The present invention is not limited to those examples, and is intended to include all modifications that is defined by the scope of the claims and are within the scope and meaning equivalent to the claims. The example of each part described in each embodiment can be used in combination with or in place of the example described in another embodiment.

### REFERENCE SIGNS LIST

100 Carbon dioxide recovery device;
1 Carbon dioxide capture module;
11 First electrode; 11a Electrode base; 11b Electrode piece;
111 Carbon dioxide capture material; 12 Second electrode; 13 Magnet;
14 Solution; 15 Storage tank; 15a Ceiling portion; 15b Bottom portion;
15c Side wall portion; 15d Supply port; 15e Discharge port; 151 Gas phase portion;
16 Gas supplying unit; 16a Carbon dioxide tank; 16b First pipe;
16c Second pipe; 16d Pump; 161 Carbon dioxide;
17 Voltage applying mechanism; 17a Power supply; 17b, 17c Conductive wire;
18 Sensor unit; 19 Capture control unit; 20 Recovery request input unit;
21 Money receiving unit; 21a Bill inserting port; 21b Coin inserting port;
21c Reading unit; 211 Money; 22 Capture material receiving unit;
22a Capture material loading port; 23 Capture material supplying unit; 24 Capture material loading mechanism;
24a Chute; 25 Recovery result output unit; 26 Article providing unit;
26a Take-out port; 27 Article; 28 Card; 28a QR code;
29 Recovery control unit; 30 Display output unit; 31 Inspection port;
32 Operation input unit; 40 Casing; 50 Capture material providing device;
51 Treatment unit; 51a Loading port; 511 Treatment member;
52 Money receiving unit; 52a Bill inserting port; 52b Coin inserting port;
53 Capture material supplying unit; 54 Providing unit; 54a, 54b Take-out port;
55 Control unit; 56 Display output unit; 58 Casing; 60 Capture product;
70 Dissolution promoting mechanism; 71 Solution adjusting mechanism; 72 Carbonation promoter;
73 Porous membrane; 74 Display mechanism; 75 Degassing promoting mechanism

## Claims

1. A carbon dioxide capture module comprising:
a first electrode;
a second electrode;
a solution in which the first electrode and the second electrode are immersed;
a gas supplying unit that supplies carbon dioxide to the solution; and
a voltage applying mechanism that applies a voltage across the first electrode and the second electrode, wherein
the first electrode includes a carbon dioxide capture material containing a first metal that has iron as a main constituent, and
the second electrode contains carbon or a second metal having a lower ionization tendency than the first metal.

2. The carbon dioxide capture module according to claim 1, wherein the voltage is 1 mV or more and 2 V or less.

3. The carbon dioxide capture module according to claim 1 or 2, wherein the carbon dioxide capture material is a pressed powder compact containing a powder made of the first metal, or a sintered material made of the first metal.

4. The carbon dioxide capture module according to claim 3, wherein the powder has an average particle size of 1 µm or more and 2,000 µm or less.

5. The carbon dioxide capture module according to any one of claims 1 to 4, wherein
the first electrode includes:
an electrode base made of carbon or a metal having a lower ionization tendency than the first metal; and
an electrode piece provided on a surface of the electrode base, and
the electrode piece is the carbon dioxide capture material.

6. The carbon dioxide capture module according to claim 5, further comprising a magnet provided to bring the carbon dioxide capture material into contact with the electrode base.

7. The carbon dioxide capture module according to claim 5, wherein the electrode base is a mesh member on which the electrode piece is placed.

8. The carbon dioxide capture module according to any one of claims 1 to 7, further comprising:
a sensor unit that detects at least one selected from the group consisting of a carbon dioxide concentration of the solution, a temperature of the solution, a pH value of the solution, a turbidity of the solution, an amount of a capture product produced by the carbon dioxide capture module, a value of the voltage across the first electrode and the second electrode, and a value of a current flowing between the first electrode and the second electrode; and
a capture control unit that controls an operation of the voltage applying mechanism based on a detection result of the sensor unit.

9. The carbon dioxide capture module according to any one of claims 1 to 8, wherein a temperature of the solution is 4°C or more and less than 200°C.

10. The carbon dioxide capture module according to any one of claims 1 to 9, wherein a pH of the solution is 0 or more and less than 12.

11. The carbon dioxide capture module according to any one of claims 1 to 10, wherein the solution contains water.

12. The carbon dioxide capture module according to claim 11, wherein the solution further contains at least one selected from the group consisting of an acidic substance, a dissolution promoter, a pH buffer, a carbonation promoter, a reducing agent, a sequestering agent, and a builder.

13. The carbon dioxide capture module according to any one of claims 1 to 12, wherein the second metal is copper or platinum.

14. A carbon dioxide recovery device comprising:
the carbon dioxide capture module according to any one of claims 1 to 13;
a recovery request input unit;
a recovery result output unit; and
a recovery control unit, wherein
the recovery control unit causes the recovery result output unit to output a recovery result of the carbon dioxide capture module based on a recovery request from the recovery request input unit.

15. The carbon dioxide recovery device according to claim 14, wherein
the recovery result output unit includes an article providing unit that provides an article corresponding to the recovery result, and
the article includes a capture product produced by the carbon dioxide capture module.

16. The carbon dioxide recovery device according to claim 15, wherein the article is a composite material including the capture product and resin in which the capture product is embedded.

17. The carbon dioxide recovery device according to claim 15 or 16, wherein the article includes a one-dimensional code or a two-dimensional code that represents operation information including the recovery result.

18. The carbon dioxide recovery device according to any one of claims 14 to 17, further comprising a capture material loading mechanism that loads the carbon dioxide capture material into the carbon dioxide capture module.

19. The carbon dioxide recovery device according to claim 18, further comprising a capture material providing device that provides the carbon dioxide capture material, wherein
the capture material providing device is provided independently of the capture material loading mechanism.
